(19) Europäisches Patentamt / European Patent Office / Office européen des brevets

(11) **EP 4 165 441 B1**

(12) **FASCICULE DE BREVET EUROPEEN**

(45) Date de publication et mention de la délivrance du brevet:
**15.04.2026 Bulletin 2026/16**

(21) Numéro de dépôt: **21740118.1**

(22) Date de dépôt: **16.06.2021**

(51) Classification Internationale des Brevets (IPC):
**G01S 19/25** (2010.01)    **G01S 19/30** (2010.01)

(52) Classification Coopérative des Brevets (CPC):
**G01S 19/254; G01S 19/30;** G01S 19/24

(86) Numéro de dépôt international:
**PCT/FR2021/051079**

(87) Numéro de publication internationale:
**WO 2021/255386 (23.12.2021 Gazette 2021/51)**

(54) **RÉCEPTEUR DE SIGNAUX DE RADIONAVIGATION COMPRENANT UN CALCULATEUR D'INDICATEUR DE PUISSANCE DE CORRÉLATION**

EMPFÄNGER VON FUNKNAVIGATIONSSIGNALEN MIT EINEM RECHNER EINES KORRELATIONSLEISTUNGSINDIKATORS

RECEIVER OF RADIONAVIGATION SIGNALS COMPRISING A COMPUTER OF A CORRELATION POWER INDICATOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.06.2020 FR 2006257**

(43) Date de publication de la demande:
**19.04.2023 Bulletin 2023/16**

(73) Titulaires:
• **Centre National d'Études Spatiales**
  **75039 Paris Cedex 01 (FR)**
• **M3 Systems**
  **31410 Lavernose-Lacasse (FR)**

(72) Inventeurs:
• **LESTARQUIT, Laurent**
  **31520 RAMONVILLE SAINT AGNE (FR)**
• **JARDAK, Nabil**
  **68100 MULHOUSE (FR)**

(74) Mandataire: **Germain Maureau**
  **12, rue Boileau**
  **69006 Lyon (FR)**

(56) Documents cités:
**EP-B1- 0 912 947     WO-A1-97/20227**
**WO-A1-98/02830     US-B1- 6 175 725**
**US-B1- 6 459 407**

• **PARKINSON B W ET AL: "Global Positioning System: Theory and Applications, GPS Receivers", 1 January 1994, GLOBAL POSITIONING SYSTEM: THEORY AND APPLICATIONS; [PROGRESS IN ASTRONAUTICS AND AERONAUTICS VOL. 163], AIAA, WASHINGTON, DC, US, PAGE(S) 329 - 407, ISBN: 978-1-56347-106-3, XP002294877**
• **VENTRE B ET AL: "Implementation and Testing of Open-loop Tracking for Airborne GPS Occultation Measurements", GNSS 2006 - PROCEEDINGS OF THE 19TH INTERNATIONAL TECHNICAL MEETING OF THE SATELLITE DIVISION OF THE INSTITUTE OF NAVIGATION (ION GNSS 2006), THE INSTITUTE OF NAVIGATION, 8551 RIXLEW LANE SUITE 360 MANASSAS, VA 20109, USA, 29 September 2006 (2006-09-29), pages 620 - 633, XP056009988**

- SILVA JOAO S ET AL: "Factored Correlator Model: A Solution for Fast, Flexible, and Realistic GNSS Receiver Simulations", GNSS 2007 - PROCEEDINGS OF THE 20TH INTERNATIONAL TECHNICAL MEETING OF THE SATELLITE DIVISION OF THE INSTITUTE OF NAVIGATION (ION GNSS 2007), THE INSTITUTE OF NAVIGATION, 8551 RIXLEW LANE SUITE 360 MANASSAS, VA 20109, USA, 28 September 2007 (2007-09-28), pages 2676 - 2686, XP056010110

- SCHMID ANDREAS ET AL: "Galileo/GPS Receiver Fixed-Point Implementation using Conventional and Differential Correlation", GNSS 2005 - PROCEEDINGS OF THE 18TH INTERNATIONAL TECHNICAL MEETING OF THE SATELLITE DIVISION OF THE INSTITUTE OF NAVIGATION (ION GNSS 2005), THE INSTITUTE OF NAVIGATION, 8551 RIXLEW LANE SUITE 360 MANASSAS, VA 20109, USA, 16 September 2005 (2005-09-16), pages 1945 - 1956, XP056009457

**Description**

## DOMAINE TECHNIQUE

La présente invention concerne un récepteur de signaux de radionavigation.

## ETAT DE LA TECHNIQUE ANTERIEURE

Par radionavigation il faut comprendre l'utilisation de signaux radioélectriques émis par des satellites GNSS pour le positionnement ou la navigation.

Dans le texte, les termes GNSS de l'anglais « Global Navigation Satellite System » sont les termes génériques qui englobent tous les systèmes de navigation par satellite. Ils se composent de plusieurs systèmes distincts dont par exemple le GPS « Global Positionning System » ou encore Galileo exploités par différents pays ou régions.

De manière générale, plusieurs bandes fréquentielles sont allouées pour l'émission des signaux GNSS. Les signaux GNSS sont construits sur le même modèle de signal c'est à dire une ou plusieurs fréquences porteuses sinusoïdales sur lesquelles sont véhiculés différents signaux binaires modulés en phase et contenant les informations nécessaires à la navigation. Il peut y avoir plusieurs types de signaux binaires véhiculés par les porteuses des signaux GNSS : un message de navigation contenant plusieurs paramètres nécessaires au récepteur pour calculer sa position (heure d'envoi du message, éphémérides du satellite, état de la constellation, etc.), un code pseudo-aléatoire permettant l'identification du satellite émetteur et la réalisation de mesures de pseudo-distance avec, éventuellement, une sous-porteuse rectangulaire pour certains signaux ayant une modulation BOC (de la dénomination anglaise Binary Offset Carrier). Les codes pseudo-aléatoires utilisés dans les signaux GNSS sont des codes PRN (de l'anglais « Pseudo Random Noise ») composés d'éléments binaires appelés "bribes". A chaque satellite est associé un ou plusieurs codes PRN - appelé code dans la suite du texte - qui lui sont propre. De manière générale, les codes pseudo-aléatoires ou codes sont des codes binaires quasi orthogonaux entre eux qui permettent aux satellites d'émettre simultanément dans la même bande de fréquence.

Dans le domaine de la métrologie, des signaux GNSS dégradés peuvent être utilisés. Notamment, le sondage atmosphérique est étudié par radio-occultation GNSS. Dans cette application, il est parfois difficile de rester synchronisé avec les signaux GNSS dégradés et donc de réaliser des mesures avec eux.

Une solution connue classiquement consiste à utiliser un récepteur GNSS muni de boucles de poursuite fermées. Des canaux de réception du signal sont alors munis de boucles de code et de boucles de porteuse imbriquées de manière à réaliser des mesures de pseudo-distance sur le code et sur la porteuse du signal. Dans la plupart des récepteurs GNSS, la boucle de code est aidée par la boucle de porteuse. Cette solution n'est cependant pas satisfaisante pour de tels signaux dégradés car les boucles peuvent décrocher, en particulier la boucle de porteuse, la plus sensible

Une autre solution, lorsque le mouvement du récepteur est connu, est de prévoir une aide en vitesse Doppler pour la boucle de porteuse, qui elle-même aide la boucle de code. C'est le cas notamment pour un récepteur en orbite spatiale comme cela est décrit dans le brevet « Procédé de réduction autonome des seuils d'acquisition et de poursuite des porteuses reçues en orbite » (FR2746232B1). De plus, ce document décrit la possibilité d'ouvrir totalement la boucle de porteuse si l'aide en vitesse Doppler est de qualité suffisante. On se trouve alors en mode dit « boucle de porteuse ouverte », seule la boucle de code reste fermée et seule la mesure de pseudo-distance de code est réalisée.

Dans le cas de la radio-occultation, la mesure d'intérêt est la mesure de phase de porteuse. Ainsi, la dernière architecture décrite ci-dessus est utilisée en y ajoutant la récupération des sorties des corrélateurs de la voie de code synchrone du code reçue (dite « Prompt » dans la littérature anglo-saxonne, dite « principale » dans la suite du brevet) pour en extraire l'erreur entre la porteuse reçue et la réplique de porteuse générée d'après le modèle de vitesse Doppler injectée, ce qui permet ensuite de reconstruire la mesure de phase de porteuse. Cette reconstruction peut être réalisée au cours d'un post-traitement éventuellement effectué au sol en temps peu différé. C'est le cas par exemple sur les missions METOP ou COSMIC. Une condition nécessaire à ce que la mesure de phase de porteuse puisse se faire est que la boucle de code reste correctement accrochée sur le pic de corrélation du signal ce qui est difficile à réaliser en présence de signaux dont le retard et/ou l'amplitude peuvent varier fortement en cas de fort retard troposphérique.

## EXPOSE DE L'INVENTION

La présente invention a pour but de fournir un récepteur de signaux de radionavigation, permettant de répondre à tout ou partie des problèmes présentés ci-avant.

Notamment, un but est de fournir une solution répondant à l'objectif suivant :

- permettre une poursuite du code du signal GNSS dégradé de façon robuste et obtenir une mesure de la phase de porteuse signal GNSS dégradé sur une plage étendue.

Ce but peut être atteint grâce à un récepteur de signaux de radionavigation, comprenant :

- un étage radiofréquence pour produire un signal GNSS Sr(t), à partir d'un signal GNSS incident;
- un générateur d'un signal de réplique de porteuse Srep(t), le signal de réplique de porteuse Srep(t) étant une estimée de la porteuse du signal GNSS Sr(t);
- un mélangeur du signal de réplique de porteuse Srep(t) avec le signal GNSS numérisé Sr(t), configuré pour obtenir un signal en bande de base Sbb(t) ;
- une boucle d'asservissement de position de code comprenant:

  - un générateur de signaux de réplique de code comprenant un intégrateur de code configuré pour délivrer, en entrée d'un générateur de code, une position de code estimée, le générateur de code comprenant d'une part un générateur de signal de réplique de code principal $SC_{R(L)}(t)$ délivrant en sortie un signal de réplique de code principal $SC_{R(L)}(t)$ et d'autre part une pluralité de générateurs de signaux de répliques de code en avance et en retard $SC_{R(k)}(t)$ présentant chacun un retard ou une avance de code décalés par rapport au signal de réplique de code principal $SC_{R(L)}(t)$ ;
  chaque réplique de la pluralité étant indexée par un indice entier compris entre 1 et n ;
  - une pluralité de corrélateurs aptes à calculer une fonction de corrélation :

    - entre le signal de réplique de code principal $SC_{R(L)}(t)$ et le signal en bande de base Sbb(t) afin de produire une corrélation principale sur un temps d'intégration cohérent Tic;
    - entre chacun des signaux de répliques de code en avance et en retard $SC_{R(k)}(t)$ et le signal en bande de base Sbb(t) afin de produire des corrélations d'avance et de retard sur le temps d'intégration cohérent Tic ; chaque corrélateur de la pluralité étant indexé par un indice ;

  - un calculateur d'indicateur de puissance de corrélation configuré pour :

    - déterminer des puissances de corrélation à partir de la corrélation principale (50) et à partir des corrélations d'avance et de retard ; et
    - déterminer un maximum de puissance de corrélation à partir des puissances de corrélation de sorte à obtenir un indice primaire kmax correspondant à l'indice du corrélateur montrant le maximum de puissance de corrélation ;

  - un calculateur de correction configuré pour déterminer une fréquence de code ajustée, en fonction de l'indice primaire kmax, en fonction d'un indice L correspondant au corrélateur traitant le signal de réplique de code principal $SC_{R(L)}(t)$, en fonction d'une période de fonctionnement $T_{fb}$ et en fonction d'un gain ajustable ; la commande de fréquence de bribe de code étant la somme entre la fréquence de code ajustée issue du calculateur de correction et un signal d'aide de porteuse issu d'un modèle physique multiplié par un coefficient d'échelle, le modèle physique correspondant à une aide Doppler ou une aide de vitesse fine, la boucle d'asservissement de position de code comprenant une sortie délivrant au moins la corrélation principale.

Certains aspects préférés mais non limitatifs sont les suivants.

Dans une mise en œuvre du récepteur de signaux de radionavigation, les corrélateurs d'indices adjacents traitent des signaux de répliques de code $SC_{R(L)}(t)$, $SC_{R(k)}(t)$ séparés entre eux par une valeur constante d d'une bribe du code du signal GNSS.

Dans une mise en œuvre du récepteur de signaux de radionavigation, la pluralité de corrélateurs comprend un nombre impair de corrélateurs, le nombre de signaux de répliques de code en avance par rapport au signal de réplique de code principal SCRP(t) et le nombre de signaux de répliques de code en retard $SC_{R(k)}(t)$ par rapport au signal de réplique de code principal SCRP(t) étant égaux.

Dans une mise en œuvre du récepteur de signaux de radionavigation, le signal GNSS incident étant doté d'une fréquence porteuse émise et d'un rythme de code, récepteur dans lequel le coefficient d'échelle est égal au rapport entre le rythme de code et de la fréquence de porteuse.

Dans une mise en œuvre du récepteur de signaux de radionavigation, la position de code délivrée par l'intégrateur de code correspond à la position de code de la réplique principale.

Dans une mise en œuvre du récepteur de signaux de radionavigation, la position de code délivrée par l'intégrateur de code correspond à la position de code de la réplique de code principale translatée d'un écart constant.

Dans une mise en œuvre du récepteur de signaux de radionavigation, la position de code délivrée par l'intégrateur de code correspond à une position de code d'une réplique de code la plus en avance.

Dans une mise en œuvre du récepteur de signaux de radionavigation, le signal de réplique de porteuse Srep(t), le signal en bande de base Sbb(t), la corrélation principale et les corrélations d'avance et de retard sont complexes ;

le calculateur d'indicateur de puissance de corrélation est configuré pour déterminer des puissances de corrélation également à partir de corrélations complexes issues de corrélateurs secondaires ;

un calculateur de complexe conjugué , apte à calculer un complexe conjugué à partir de la corrélation complexe principale, est agencé en sortie de la corrélation complexe principale de sorte à délivrer le complexe conjugué de la corrélation principale ; et les corrélateurs secondaires sont agencés de sorte que chacune de la corrélation complexe principale et des corrélations complexes en avance et en retard soit corrélée au complexe conjugué de la corrélation principale sur la période de fonctionnement $T_{fb}$ ;

la sortie des corrélateurs secondaires constituant l'entrée du calculateur d'indicateur de puissance de corrélation complexe.

Dans une mise en œuvre du récepteur de signaux de radionavigation, la période de fonctionnement $T_{fb}$ correspond à un temps d'intégration non-cohérent $T_{nc}$.

Dans une mise en œuvre du récepteur de signaux de radionavigation, le temps d'intégration non-cohérent $T_{nc}$ est égal à un multiple du temps d'intégration cohérent Tic de la corrélation principale.

Dans une mise en œuvre du récepteur de signaux de radionavigation, la période de fonctionnement $T_{fb}$ correspond à un temps d'intégration cohérent.

Dans une mise en œuvre, le récepteur de signaux de radionavigation la pluralité de corrélateurs comprend un nombre supérieur ou égal à trois de corrélateurs.

Dans une mise en œuvre du récepteur de signaux, le signal GNSS numérisé Sr(t) comporte une fréquence porteuse intermédiaire $f_i$, la commande de fréquence en entrée du générateur de signal de réplique de porteuse étant obtenue à partir de la fréquence Doppler du signal Sr(t) estimée par le modèle externe et de la fréquence $f_i$.

Dans une mise en œuvre du récepteur de signaux, la numérisation du signal Sr(t) est réelle en fréquence intermédiaire $f_i$, et le mélangeur du signal de réplique de porteuse Srep(t) avec le signal GNSS numérisé Sr(t) est apte à traiter la numérisation réelle du signal Sr(t).

Dans une mise en œuvre du récepteur de signaux, la numérisation du signal Sr(t) est complexe en fréquence intermédiaire $f_i$, et le mélangeur du signal de réplique de porteuse avec le signal GNSS numérisé Sr(t) est apte à traiter la numérisation complexe du signal Sr(t).

Dans une mise en œuvre du récepteur de signaux, la boucle d'asservissement de position de code comprend :

une pluralité de corrélateurs aptes à calculer une fonction de corrélation complexe :

- entre le signal de réplique de code principal et le signal en bande de base afin de produire une corrélation complexe principale sur un temps d'intégration cohérent ;
- entre chacun des signaux de répliques de code en avance et en retard et le signal en bande de base afin de produire des corrélations complexes d'avance et de retard sur le temps d'intégration cohérent ; chaque corrélateur de la pluralité étant indexé par un indice ;

- un calculateur d'indicateur de puissance de corrélation configuré pour :

- déterminer des puissances de corrélation à partir de la corrélation complexe principale et à partir des corrélations complexes d'avance et de retard; et
- déterminer un maximum de puissance de corrélation complexe à partir des puissances de corrélation de sorte à obtenir un indice primaire correspondant à l'indice du corrélateur montrant le maximum de puissance de corrélation complexe ;
- un calculateur de correction configuré pour déterminer une fréquence de code ajustée, en fonction de l'indice primaire (kmax), en fonction d'un indice correspondant au corrélateur traitant le signal de réplique de code principal, en fonction d'une période de fonctionnement et en fonction d'un gain ajustable ;

la commande de fréquence de bribe de code étant la somme entre la fréquence de code ajustée issue du calculateur de correction et un signal d'aide de porteuse issu du modèle physique multiplié par un coefficient d'échelle, la boucle d'asservissement de position de code comprenant une sortie délivrant au moins la corrélation complexe principale.

Dans une mise en œuvre du récepteur de signaux, le signal en bande de base est complexe.

**BREVE DESCRIPTION DES DESSINS**

D'autres aspects, buts, avantages et caractéristiques de l'invention apparaîtront mieux à la lecture de la description détaillée suivante de modes de réalisation préférés de celle-ci, donnée à titre d'exemple non limitatif, et faite en référence aux dessins annexés sur lesquels :

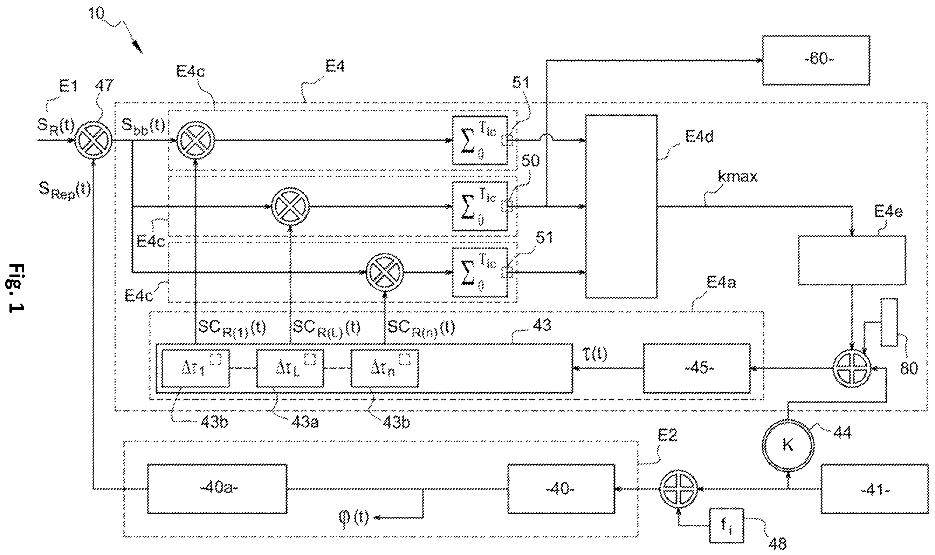

- la figure 1 illustre une vue schématique d'un exemple de récepteur de signaux de radionavigation selon l'invention;

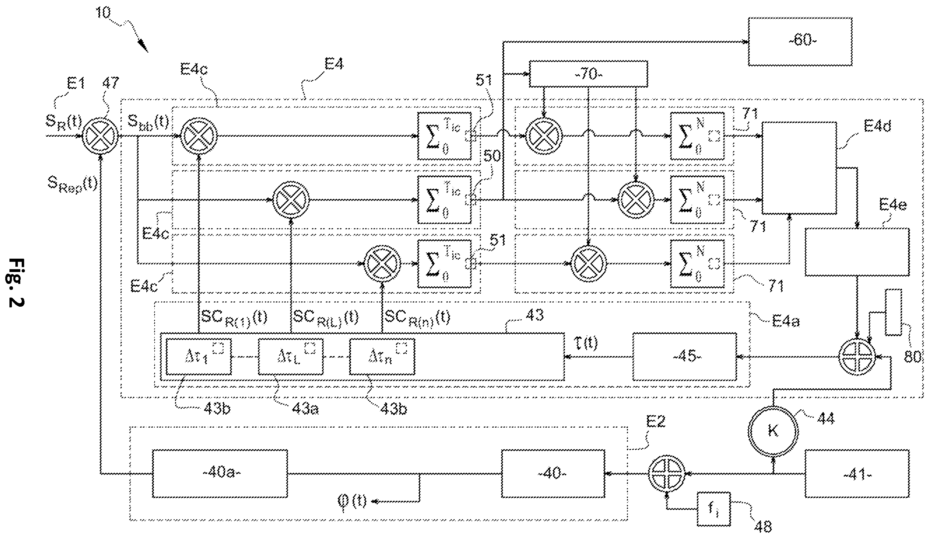

- la figure 2 illustre une vue schématique d'un exemple supplémentaire d'un récepteur de signaux de radionavigation selon l'invention où un calculateur de complexe conjugué est agencé en sortie de la corrélation complexe principale et où une pluralité de corrélateurs secondaires est agencée de sorte que chacune de la corrélation complexe principale et des corrélations complexes en avance et en retard soit corrélée au complexe conjugué de la corrélation principale, la sortie des corrélateurs secondaires constituant l'entrée du calculateur d'indicateur de puissance de corrélation complexe.

**EXPOSE DETAILLE DE MODES DE REALISATION PARTICULIERS**

Sur les figures 1 et 2 annexées et dans la suite de la description, des éléments identiques ou similaires en termes fonctionnels sont repérés par les mêmes références. De plus, les différents éléments ne sont pas représentés à l'échelle de manière à privilégier la clarté des figures pour en faciliter la compréhension. Par ailleurs, les différents modes de réalisation et variantes ne sont pas exclusifs les uns des autres et peuvent, au contraire, être combinés entre eux.

Dans la suite de la description, sauf indication contraire, les termes « sensiblement », « environ », « globalement » et « de l'ordre de » signifient « à 10 % près ».

De façon générale et dans la suite du texte, un signal ayant une valeur complexe ou dit complexe, est un signal ayant une composante en phase qui correspond à la partie réelle et une composante en quadrature qui correspond à la partie imaginaire.

Dans l'ensemble du texte, le terme « période » est homogène à un temps et pourra être utilisé de façon équivalente.

Dans l'ensemble des modes de réalisations de l'invention et comme illustré sur les figures 1 et 2, le récepteur de signaux de radionavigation 10 comprend un étage radiofréquence E1. L'étage radiofréquence E1 peut comprendre par exemple une ou plusieurs antennes, des éléments de filtrage, d'amplification, de translation de fréquence, de numérisation, et un contrôle automatique de gain.

L'étage radiofréquence E1 produit un signal GNSS numérisé ou analogique Sr(t), dépendant du temps t, à la fréquence d'échantillonnage Fe qui vaut typiquement entre 1 et 50 MHz, à partir du signal GNSS incident. Le signal GNSS numérisé Sr(t) comprend ainsi une bande de fréquence de signal numérisé. Le signal GNSS numérisé Sr(t) peut être réel ou complexe. La fréquence de la porteuse du signal numérisé est généralement abaissée vers une fréquence intermédiaire fi. fi peut être proche de zéro voire égale à zéro, dans ce cas on dit que la numérisation se fait en bande de base.

Dans la suite du texte les signaux indiqués avec (t) sont dépendants du temps t.

Entre la réception du signal et les mesures effectuées sur le signal numérisé, le récepteur de signaux de radionavigation 10 doit effectuer plusieurs étapes pour extraire les informations nécessaires. En particulier, des étapes d'acquisition et de poursuite sont réalisées qui ont pour but de synchroniser le récepteur avec les signaux de navigation.

Dans le texte, les termes « modèle physique » correspondent à une aide Doppler ou une aide de vitesse fine.

Le récepteur de signaux de radionavigation 10 comprend également un générateur E2 de signal de réplique de porteuse Srep(t) pour former une réplique locale de la porteuse. Ce signal de réplique de porteuse Srep(t) est un signal complexe, représenté par une valeur complexe et généré à la cadence Fe. Le signal de réplique de porteuse Srep(t) consiste en une estimée de la porteuse du signal d'entrée. Ce signal est défini par :

Srep(t) = e$^{j \cdot \varphi(t)}$ où $\varphi(t)$ est la phase de ce signal de réplique de porteuse Srep(t). La phase du signal de réplique de porteuse, est obtenue en intégrant une commande de fréquence en entrée d'un intégrateur de porteuse 40. L'intégrateur de porteuse 40 est un intégrateur pur de type oscillateur à commande numérique (ou NCO / « Numerically controlled oscillator » selon la terminologie anglo-saxonne).

Dans un exemple, le générateur E2 d'un signal de réplique de porteuse Srep(t) complexe à la même cadence d'échantillonnage Fe, dont une phase $\varphi(t)$ est obtenue en intégrant, avec un intégrateur de porteuse 40, une commande de fréquence en entrée du générateur E2 de signal de réplique de porteuse, la commande de fréquence en entrée du générateur E2 de signal de réplique de porteuse étant obtenue à partir d'au moins une fréquence Doppler du signal Sr(t) estimée par un modèle physique 41, le générateur E2 comprenant un dispositif 40a apte à générer le signal de réplique de porteuse Srep(t) complexe à partir de la sortie de l'intégrateur de porteuse 40.

Dans un exemple de mise en œuvre du récepteur de signaux de radionavigation 10, le générateur E2 comprend un dispositif 40a apte à générer le signal de réplique de porteuse Srep(t) complexe à partir de la sortie de l'intégrateur de porteuse 40.

Le récepteur de signaux de radionavigation 10 comprend en outre un mélangeur 47 du signal de réplique de porteuse Srep(t) avec le signal GNSS numérisé Sr(t). Le signal de sortie du mélangeur 47 est un signal en bande de base Sbb(t), échantillonné à la cadence Fe. Le signal en bande de base Sbb(t) et le signal de réplique de porteuse Srep(t) sont complexes.

Dans une mise en œuvre du récepteur de signaux de radionavigation 10, la numérisation du signal Sr(t) est complexe.

Dans une autre mise en œuvre du récepteur de signaux de radionavigation 10, la numérisation du signal Sr(t) est réelle.

Le mélangeur 47 du signal de réplique de porteuse Srep(t) avec le signal GNSS numérisé Sr(t) est prévu pour être apte à traiter la numérisation réelle ou complexe du signal Sr(t) selon l'équation Math. 1 suivante :

$$Sbb(t) = Sr(t) \times Srep(t)$$

Afin de réaliser la poursuite de code, le récepteur de signaux de radionavigation 10 comprend une boucle d'asservissement de position de code E4. La boucle d'asservissement de position de code E4 peut également être appelée poursuite de code.

La boucle d'asservissement de position de code E4 comprend tout d'abord un générateur de signaux de réplique de code E4a fonctionnant à la cadence Fe.

Le générateur de signaux de réplique de code E4a comprend notamment un intégrateur de code 45 et un générateur de code 43.

L'intégrateur de code 45 est un intégrateur pur de type oscillateur à commande numérique (ou NCO / « Numerically controlled oscillator » selon la terminologie anglo-saxonne) qui délivre par exemple une position de code dite principale à la cadence du signal échantillonné Fe. Cet intégrateur de code 45 est configuré pour délivrer, en entrée d'un générateur de code 43, une position de code estimée, comme la position $\tau(t)$ du code principal ou, selon les implémentations, de tout autre réplique de code, typiquement la réplique la plus en avance. Pour cela il reçoit en entrée une commande de fréquence des bribes de code constituée de la somme entre la fréquence issue de la boucle de code, un biais 80 de rythme de code constant et valant généralement le produit $RC_{GNSS}$ et un signal d'aide de porteuse issu du modèle de Doppler 41 multiplié par un coefficient d'échelle 44 appelé $K = RC_{GNSS}/f_{GNSS}$ où $RC_{GNSS}$ est le rythme de code transmis par le GNSS et $f_{GNSS}$ est la fréquence de porteuse.

Le générateur de code 43 comprend un générateur 43a de signal de réplique de code principal $SC_{RP}(t)$ délivrant en sortie un signal, par exemple réel, de réplique de code principal $SC_{RP}(t)$.

Le générateur de code 43 comprend également une pluralité de générateurs 43b de signaux, par exemple réels, de répliques de code en avance et en retard. Une autre notation des signaux réplique de code est : $SC_{R(k)}(t)$ où l'indice k est le rang de la réplique. Chacun des signaux de répliques de code en avance $SC_{R(k)}(t)$ présente une avance de code différente et échelonnée, autrement dit décalée, de façon quelconque ou discrète selon la mise en œuvre choisie, par rapport au signal de réplique de code principal $SC_{RP}(t)$. Chacun des signaux de répliques de code en retard $SC_{R(k)}(t)$ présente une position de code en retard, autrement dit présente un retard de code différent et échelonné de façon quelconque ou discrète par rapport au signal de réplique de code principal $SC_{RP}(t)$.

Ainsi, la pluralité de générateurs 43b de signaux de répliques de code en avance et en retard peut comporter au moins deux générateurs de signaux de répliques de code par exemple dont un en avance et dont un en retard. Afin d'optimiser le fonctionnement du récepteur de signaux de radionavigation 10, la pluralité de générateurs 43b de signaux de répliques de code en avance et en retard peut comporter un nombre de générateurs de signaux de répliques de code supérieur ou égal à 3, avec selon un exemple non limitatif au moins deux générateurs de signaux de répliques de code en avance et au moins deux générateurs de signaux de répliques de code en retard.

On définit L comme étant le rang de la réplique principale de code, c'est à dire :

$$SC_{RP}(t) = SC_{R(L)}(t),$$

Dans tout le texte, les termes $SC_{RP}(t)$ et $SC_{R(L)}(t)$ sont équivalents.

Les positions (avance si valeur positive, retard si valeur négative) des signaux répliques par rapport au compteur issu de l'intégrateur de code 45 sont notés $\Delta\tau_k$.

Une réplique de code $SC_{R(k)}(t)$ est en avance si : $\Delta\tau_k > \Delta\tau_L$.

Une réplique de code $SC_{R(k)}(t)$ est en retard si : $\Delta\tau_k < \Delta\tau_L$. Dans un autre exemple de mise en œuvre du récepteur de signaux de radionavigation 10, chacun des signaux de répliques de code principal $SC_{RP}(t)$ et en avance et en retard $SC_{R(k)}(t)$ sont séparés entre eux par une valeur constante d exprimée en bribes du code du signal GNSS. En d'autres termes, l'intervalle entre deux répliques de code adjacentes est identique. Dans le cas où l'intégrateur de code 45 correspond à la réplique la plus en avance, les écarts de positions $\Delta\tau_k$ entre chaque réplique de code $SC_{R(k)}(t)$ et la sortie de l'intégrateur de code 45 valent :

$$\{\Delta\tau_1 \; ; \; \Delta\tau_2 \; ;...; \; \Delta\tau_L \; ; \; ... \; ; \; \Delta\tau_{n-1} \; ; \; \Delta\tau_n\} = \{-(n-1)d \; ; \; -(n-2)d \; ; \; ... \; ; \; -(n-L)d \; ; \; ... \; ; \; d \; ; \; 0\}$$

Dans un autre exemple, le nombre de signaux de répliques de code en retard $SC_{R(k)}(t)$ est égal au nombre de signaux de répliques de code en avance $SC_{R(k)}(t)$. Dans cet exemple, l'indice L de la réplique principale vaut : L=(n+1)/2, le nombre total de répliques étant impair dans ce cas.

Si ces deux derniers cas sont combinés, alors les écarts de position des répliques de code dans le cas où l'intégrateur de code 45 correspond à la réplique principale valent :

$$\{\Delta\tau_1 \; ; \; ... \; ; \; \Delta\tau_{L-1} \; ; \; \Delta\tau_L \; ; \; \Delta\tau_{L+1} \; ; \; ... \; ; \; \Delta\tau_n\} = \{-(n-1)d/2 \; ; \; ... \; ; \; -d \; ; \; 0 \; ; \; d \; ; \; ... \; ; \; (n-1)d/2\}.$$

La boucle d'asservissement de position de code E4 comprend en outre la même pluralité n de corrélateurs E4c. Selon un mode de réalisation, un corrélateur parmi la pluralité de corrélateur E4c comprend un mélangeur et un sommateur avec remise à zéro. Les mélangeurs et les sommateurs constituent ensemble des corrélateurs E4c aptes à réaliser des fonctions de corrélations complexes connues de l'homme du métier. Par corrélation complexe il faut comprendre que les parties en phase et en quadrature des signaux sont traitées lors de la corrélation. Les parties en phase de la corrélation sont notées avec un indice I : $C_{I(k)}(t)$ et les parties en quadrature sont notées avec un indice Q : $C_{Q(k)}(t)$.

Chacun des signaux de répliques de code principal $SC_{R(L)}(t)$ et en avance et en retard $SC_{R(k)}(t)$ subit une opération de corrélation complexe sur une période appelée temps d'intégration cohérent égale à Tic avec le signal en bande de base Sbb(t). Tic présente une valeur comprise typiquement entre 1 et quelques dizaines de millisecondes.

Le résultat de la corrélation complexe $C_{(k)}(t)$ avec la réplique d'ordre k, à l'instant t est donné par l'équation Math. 3 suivante:

$$C_{(k)}(t_j) = C_{I(k)}(t_j) + jC_{Q(k)}(t_j) = \sum_{t=t_j-T_{ic}+T_e}^{t} S_r(t) \times S_{rep}(t) \times SC_{R(k)}(t)$$

$T_e$ représente l'intervalle entre 2 échantillons numérisés: $T_e = 1/Fe$.

La corrélation complexe principale 50 aussi notée $C_{(L)}(t_j)$ est aussi appelée point de corrélation « Prompt » ou encore appelée corrélation « synchrone ».

Des corrélateurs sont également agencés entre chacun des signaux de répliques de code en avance $SC_{R(k)}(t)$ et le signal de bande de base Sbb(t) afin de produire des corrélations en avance 51, aussi notées $C_{(k)}(T_j)$ et appelées point de corrélation « en avance », sur un temps d'intégration cohérent Tic.

Des corrélateurs sont également agencés entre chacun des signaux de répliques de code en retard $SC_{R(k)}(t)$ et le signal en bande de base Sbb(t) afin de produire des corrélations de retard 51, aussi notées $C_{(k)}(t_j)$ et appelées point de corrélation « En retard », suivant le temps d'intégration cohérent Tic.

Dans un autre exemple, la pluralité E4c de mélangeurs et de corrélateurs comprend un nombre impair de mélangeurs et le même nombre impair de corrélateurs E4c.

Dans un exemple, de façon avantageuse, le nombre de signaux de répliques de code $SC_{R(k)}(t)$ en avance par rapport au signal de réplique de code principal $SC_{R(L)}(t)$ est égal au nombre de signaux de répliques de code $SC_{R(k)}(t)$ en retard $SC_{R(k)}(t)$ par rapport au signal de réplique de code principal $SC_{R(L)}(t)$.

La boucle d'asservissement de position de code E4 comprend également un calculateur d'indicateur de puissance de corrélation E4d. Celui-ci est configuré pour déterminer un indicateur représentant la puissance ou une grandeur liée à la puissance comme une amplitude de corrélation par exemple. Ici, celui-ci est configuré pour déterminer des puissances de corrélation à partir de la corrélation complexe principale 50 et à partir des différentes corrélations complexes d'avance et de retard 51 ou à partir de corrélations complexes issues de corrélateurs secondaires 71.

La détermination d'une puissance de corrélation par le calculateur d'indicateur de puissance de corrélation E4d consiste à calculer le carré du module de chacune des corrélations complexes. Ici cela consiste à calculer le carré du module d'une corrélation complexe liée à un corrélateur d'indice k donné. L'équation Math. 4 décrit le calcul d'une puissance de corrélation appelée ici Power_Corr(k) où k correspond à un indice de corrélateur. L'équation Math. 4 est la suivante :

$$\text{Power}_{\text{Corr}(k)} = \left| C_{I(k)} + jC_{Q(k)} \right|^2 = C_{I(k)}^2 + C_{Q(k)}^2$$

Le calculateur d'indicateur de puissance de corrélation E4d est également configuré pour déterminer un maximum de puissance de corrélation entre chacune des puissances de corrélation calculées comme décrit dans le paragraphe précédent. Ainsi il est obtenu un indice primaire correspondant à l'indice du corrélateur montrant le maximum de puissance et qui, pour l'exemple qui suit, s'appelle kmax.

La boucle d'asservissement de position de code E4 comprend également un calculateur de correction E4e. Le calculateur de correction E4e est configuré pour déterminer une correction de fréquence de code calculée à chaque itération de la boucle. La fréquence de code est ainsi ajustée avec une correction établie en fonction de l'écart de position de la réplique de l'indice primaire : $\Delta\tau_{kmax}(t)$ et de l'indice L : $\Delta\tau_L(t)$ désignant la réplique du code principal $SC_{R(L)}(t)$. La correction de fréquence $\delta$ dépend également d'une période de fonctionnement $T_{fb}$ de la boucle et d'un gain, ici appelé G pour l'exemple, qui peut être modulable pour optimiser le fonctionnement de la boucle. Une valeur nominale de G est égale à 1. La correction de fréquence $\delta$ est alors exprimée dans l'équation Math. 5 suivante :

$$\delta = \frac{(\Delta\tau_{kmax} - \Delta\tau_L) \times G}{T_{fb}}$$

Dans le cas où les répliques de codes sont espacées d'un intervalle régulier d exprimé en bribe de code, on obtient la position du signal réplique ayant la meilleure corrélation par rapport au signal de réplique de code principal $SC_{R(L)}(t)$ en effectuant (kmax-L)xd, et la correction $\delta$ de fréquence de l'intégrateur de code 45 devient :

$$\delta = \frac{(kmax - L) \times d \times G}{T_{fb}}$$

Les corrections de fréquence $\delta$ sont appliquées à l'intégrateur de code 45 pendant la période de fonctionnement $T_{fb}$ qui suit jusqu'à ce qu'une nouvelle correction de fréquence soit calculée d'après les sorties de corrélateur à la période de fonctionnement $T_{fb}$.

$T_{fb}$ correspond, dans une mise en œuvre, à un temps cohérent d'intégration.

Avantageusement, la période de fonctionnement de la boucle sera égale au temps d'intégration cohérent du corrélateur suivant : $T_{fb}=T_{ic}$. Une fois réinjectée vers l'intégrateur de code 45, une telle correction de fréquence issue du calculateur d'indicateur de puissance de corrélation E4d et du calculateur de correction E4e permet avantageusement de rendre plus robuste la corrélation du code du signal reçu de manière à réaliser une mesure de phase de porteuse sur les sorties de la corrélation complexe principale 50. En effet, les techniques classiques en boucle fermée ne permettent pas de poursuivre des signaux fortement perturbés par exemple pour l'utilisation en radio-occultation ou en navigation en environnement sévère. Ainsi la boucle d'asservissement de position de code E4 comprend une sortie 60 délivrant la corrélation complexe principale 50 à chaque itération de boucle. Cette sortie 60 est, comme illustré sur les figures 1 et 2, placée avant la détermination de puissance de corrélation. La corrélation principale 50 et les paramètres des signaux dont elle est issue sont ainsi transmis pour des traitements ultérieurs soit en temps réel, soit en temps différé par exemple dans des stations terrestres de traitement des données de radio-occultation.

La commande de fréquence en entrée du générateur E2 est la somme de la fréquence Doppler du signal Sr(t) estimée par un modèle externe 41 et de la fréquence $f_i$.

Ainsi la poursuite reste stable et l'extraction de la phase de porteuse est assurée. Ceci est essentiel dans des applications par exemple de radio occultation.

Plus généralement, l'intégrateur de code 45 peut être configuré pour recevoir en entrée la commande de fréquence de bribe de code, cette commande de fréquence de bribe code étant la somme entre la fréquence de code ajustée issue du calculateur de correction E4e, un signal d'aide de porteuse issu du modèle physique 41 multiplié par un coefficient d'échelle 44 et, éventuellement, le biais 80 de rythme de code constant évoqué ci-dessus. Ainsi, le récepteur de signaux de radionavigation 10, et en particulier sa boucle d'asservissement de position de code E4, peut être configuré pour délivrer, en entrée de l'intégrateur de code 45, la commande de fréquence de bride de code.

Dans un exemple supplémentaire de réalisation illustré sur la figure 2, le récepteur de signaux de radionavigation 10 comprend un calculateur de complexe conjugué 70. Le calculateur de complexe conjugué 70 est apte à calculer un complexe conjugué à partir de la corrélation complexe principale 50 ou à partir du signal de réplique de code principal $SC_{R(L)}(t)$. Le calculateur de complexe conjugué 70 est agencé en sortie de la corrélation complexe principale 50 de sorte à délivrer le complexe conjugué de la corrélation principale 50 ou du signal de réplique de code principal $SC_{R(L)}(t)$. Les corrélateurs secondaires 71 sont agencés de sorte que chacune de la corrélation complexe principale 50 et des corrélations complexes en avance et en retard 51 soit corrélée au complexe conjugué 70 de la corrélation principale 50 ou au complexe conjugué 70 du signal de réplique de code principal $SC_{R(L)}t$. Ces corrélateurs secondaires 71 réalisent alors une intégration non cohérente dont la période $t_{nc}$ est multiple entier du temps d'intégration cohérent $T_{ic}$ des corrélateurs principaux 50 tel que : $t_{nc}$ = N x $t_{ic}$. La sortie des corrélateurs secondaires 71 constitue ensuite l'entrée du calculateur d'indicateur de puissance de corrélation complexe E4d.

Dans une implémentation, la période de fonctionnement $t_{fb}$ de la boucle de code vaudra avantageusement le temps d'intégration cohérent : $T_{fb} = T_{nc}$.

Cette architecture est avantageuse car elle permet d'étendre le temps d'intégration total et d'augmenter le rapport signal sur bruit.

## Revendications

1. Récepteur de signaux de radionavigation (10), comprenant :

   - un étage radiofréquence (E1) pour produire un signal GNSS (Sr(t)), à partir d'un signal GNSS incident;
   - un générateur (E2) d'un signal de réplique de porteuse (Srep(t)), le signal de réplique de porteuse (Srep(t)) étant une estimée de la porteuse du signal GNSS (Sr(t)) ;
   - un mélangeur (47) du signal de réplique de porteuse (Srep(t)) avec le signal GNSS numérisé (Sr(t)), configuré pour obtenir un signal en bande de base Sbb(t) ;
   - une boucle d'asservissement de position de code (E4) comprenant:

     - un générateur de signaux de réplique de code (E4a) comprenant un intégrateur de code (45) configuré pour délivrer, en entrée d'un générateur de code (43), une position de code estimée, le générateur de code (43) comprenant d'une part un générateur (43a) de signal de réplique de code principal ($SC_{R(L)}$(t)) délivrant en sortie un signal de réplique de code principal ($SC_{R(L)}$(t)) et d'autre part une pluralité de générateurs (43b) de signaux de répliques de code en avance et en retard ($SC_{R(k)}$(t)) présentant chacun un retard ou une avance de code décalés par rapport au signal de réplique de code principal ($SC_{R(L)}$(t)) ;
     chaque réplique de la pluralité étant indexée par un indice entier compris entre 1 et n ;
     - une pluralité de corrélateurs (E4c) aptes à calculer une fonction de corrélation :

       - entre le signal de réplique de code principal ($SC_{R(L)}$(t)) et le signal en bande de base Sbb(t) afin de produire une corrélation principale (50) sur un temps d'intégration cohérent (Tic);
       - entre chacun des signaux de répliques de code en avance et en retard ($SC_{R(k)}$(t)) et le signal en bande de base (Sbb(t)) afin de produire des corrélations d'avance et de retard (51) sur le temps d'intégration cohérent (Tic) ; chaque corrélateur de la pluralité étant indexé par un indice ;

     - un calculateur d'indicateur de puissance de corrélation (E4d) configuré pour :

       - déterminer des puissances de corrélation à partir de la corrélation principale (50) et à partir des corrélations d'avance et de retard (51); et
       - déterminer un maximum de puissance de corrélation à partir des puissances de corrélation de sorte à obtenir un indice primaire (kmax) correspondant à l'indice du corrélateur montrant le maximum de puissance de corrélation ;

     - un calculateur de correction (E4e) configuré pour déterminer une fréquence de code ajustée, en fonction de l'indice primaire (kmax), en fonction d'un indice (L) correspondant au corrélateur traitant le signal de réplique de code principal ($SC_{R(L)}$(t)), en fonction d'une période de fonctionnement ($T_{fb}$) et en fonction d'un gain ajustable ; la commande de fréquence de bribe de code étant la somme entre la fréquence de code ajustée issue du calculateur de correction (E4e) et un signal d'aide de porteuse issu d'un modèle physique (41) multiplié par un coefficient d'échelle (44), ledit modèle physique (41) correspondant à une aide Doppler ou une aide de vitesse fine,
     la boucle d'asservissement de position de code (E4) comprenant une sortie (60) délivrant au moins la corrélation principale (50).

2. Récepteur de signaux de radionavigation (10) selon la revendication 1 dans lequel les corrélateurs d'indices adjacents traitent des signaux de répliques de code ($SC_{R(L)}$(t)), ($SC_{R(k)}$(t)) séparés entre eux par une valeur constante d d'une bribe du code du signal GNSS.

3. Récepteur de signaux de radionavigation (10) selon l'une quelconque des revendications 1 ou 2 dans lequel la pluralité de corrélateurs (E4c) comprend un nombre impair de corrélateurs, le nombre de signaux de répliques de code en avance par rapport au signal de réplique de code principal (SCRP(t)) et le nombre de signaux de répliques de code en retard ($SC_{R(k)}(t)$) par rapport au signal de réplique de code principal (SCRP(t)) étant égaux.

4. Récepteur de signaux de radionavigation (10) selon l'une des revendications 1 à 3, le signal GNSS incident étant doté d'une fréquence porteuse émise et d'un rythme de code, récepteur dans lequel le coefficient d'échelle (44) est égal au rapport entre le rythme de code et de la fréquence de porteuse.

5. Récepteur de signaux de radionavigation (10) selon l'une des revendications 1 à 4, dans lequel la position de code délivrée par l'intégrateur de code (45) correspond à la position de code de la réplique principale.

6. Récepteur de signaux de radionavigation (10) selon l'une des revendications 1 à 5, dans lequel la position de code délivrée par l'intégrateur de code (45) correspond à la position de code de la réplique de code principale translatée d'un écart constant.

7. Récepteur de signaux de radionavigation (10) selon la revendication 6, dans lequel la position de code délivrée par l'intégrateur de code (45) correspond à une position de code d'une réplique de code la plus en avance.

8. Récepteur de signaux de radionavigation (10) selon l'une quelconque des revendications 1 à 7, dans lequel le signal de réplique de porteuse (Srep(t)), le signal en bande de base Sbb(t), la corrélation principale (50) et les corrélations d'avance et de retard (51) sont complexes ;

   dans lequel le calculateur d'indicateur de puissance de corrélation (E4d) est configuré pour déterminer des puissances de corrélation également à partir de corrélations complexes issues de corrélateurs secondaires (71) ;
   dans lequel un calculateur de complexe conjugué (70), apte à calculer un complexe conjugué à partir de la corrélation complexe principale (50), est agencé en sortie de la corrélation complexe principale (50) de sorte à délivrer le complexe conjugué de la corrélation principale (50) ; et
   dans lequel les corrélateurs secondaires (71) sont agencés de sorte que chacune de la corrélation complexe principale (50) et des corrélations complexes en avance et en retard (51) soit corrélée au complexe conjugué (70) de la corrélation principale (50) sur la période de fonctionnement ($T_{fb}$) ;
   la sortie des corrélateurs secondaires (71) constituant l'entrée du calculateur d'indicateur de puissance de corrélation complexe (E4d).

9. Récepteur de signaux de radionavigation (10) selon la revendication 8, dans lequel la période de fonctionnement ($T_{fb}$) correspond à un temps d'intégration non-cohérent ($T_{nc}$).

10. Récepteur de signaux de radionavigation (10) selon la revendication 9, dans lequel le temps d'intégration non-cohérent ($T_{nc}$) est égal à un multiple du temps d'intégration cohérent (Tic) de la corrélation principale.

11. Récepteur de signaux de radionavigation (10) selon l'une des revendications 1 à 8, dans lequel la période de fonctionnement ($T_{fb}$) correspond à un temps d'intégration cohérent.


**Patentansprüche**

1. Empfänger (10) für Funknavigationssignale, umfassend:

   - eine Funkfrequenzstufe (E1) zur Erzeugung eines GNSS-Signals (Sr(t)) ausgehend von einem ankommenden GNSS-Signal;
   - einen Generator (E2) eines Trägerreplikationssignals (Srep(t)), wobei das Trägerreplikationssignal (Srep(t)) eine Schätzung des Trägers des GNSS-Signals (Sr(t)) ist;
   - einen Mischer (47) des Trägerreplikationssignals (Srep(t)) mit dem digitalisierten GNSS-Signal (Sr(t)), der so konfiguriert ist, dass er ein Basisbandsignal Sbb(t) erhält;
   - eine Code-Positionsregelschleife (E4), umfassend:
   - einen Codereplikationssignalgenerator (E4a), der einen Codeintegrator (45) umfasst, der so konfiguriert ist, dass er am Eingang eines Codegenerators (43) eine geschätzte Codeposition ausgibt, wobei der Codegenerator (43) einerseits einen Generator (43a) für ein Hauptcodereplikationssignal ($SC_{R(L)}(t)$), der am Ausgang ein Hauptcodereplikationssignal ($SC_{R(L)}(t)$) ausgibt, und andererseits eine Vielzahl von Generatoren (43b) für Vorlauf- und Nachlauf-Codereplikationssignale ($SC_{R(k)}(t)$) umfasst, die jeweils einen gegenüber dem Hauptcodereplikationssignal ($SC_{R(L)}$(t)) versetzten Code-Nachlauf oder -Vorlauf aufweisen;
wobei jede Replikation der Vielzahl durch einen ganzen Index zwischen 1 und n indiziert wird;
- eine Vielzahl von Korrelatoren (E4c), die in der Lage sind, eine Korrelationsfunktion zu berechnen:

- zwischen dem Hauptcodereplikationssignal ($SC_{R(L)}$(t)) und dem Basisbandsignal Sbb(t), um eine Hauptkorrelation (50) über eine kohärente Integrationszeit (Tic) zu erzeugen;
- zwischen jedem der vorzeitigen und verzögerten Codereplikationssignale ($SC_{R(k)}$(t)) und dem Basisbandsignal (Sbb(t)), um Vorlauf- und Nachlaufkorrelationen (51) über die kohärente Integrationszeit (Tic) zu erzeugen; wobei jeder Korrelator der Vielzahl durch einen Index indiziert wird;
- einen Korrelationsleistungsindikatorrechner (E4d), der für Folgendes konfiguriert ist:
- Bestimmen von Korrelationsleistungen aus der Hauptkorrelation (50) und aus den Vorlauf- und Nachlaufkorrelationen (51) und
- Bestimmen einer maximalen Korrelationsleistung aus den Korrelationsleistungen, um einen Primärindex (kmax) zu erhalten, der dem Korrelatorindex entspricht, der die maximale Korrelationsleistung anzeigt;
- einen Korrekturrechner (E4e), der so konfiguriert ist, dass er eine angepasste Codefrequenz in Abhängigkeit vom Primärindex (kmax) in Abhängigkeit von einem Index (L) bestimmt, der dem Korrelator entspricht, der das Hauptcodereplikationssignal ($SC_{R(L)}$(t)) verarbeitet, in Abhängigkeit von einer Betriebsperiode ($T_{fb}$) und in Abhängigkeit von einer einstellbaren Verstärkung; wobei der Frequenzbefehl des Codechips die Summe zwischen der angepassten Codefrequenz aus dem Korrekturrechner (E4e) und einem Trägerhilfesignal aus einem physikalischen Modell (41) multipliziert mit einem Skalenkoeffizienten (44) ist, wobei das physikalische Modell (41) einer Dopplerhilfe oder einer Feingeschwindigkeitshilfe entspricht,

wobei die Codepositionsregelschleife (E4) einen Ausgang (60) umfasst, der mindestens die Hauptkorrelation (50) liefert.

2. Empfänger (10) für Funknavigationssignale nach Anspruch 1, wobei die benachbarten Indexkorrelatoren Codereplikationssignale ($SC_{R(L)}$(t)), ($SC_{R(k)}$(t)) verarbeiten, die voneinander durch einen konstanten Wert d eines Chips des Codes des GNSS-Signals getrennt sind.

3. Empfänger (10) für Funknavigationssignale nach einem der Ansprüche 1 oder 2, wobei die Vielzahl von Korrelatoren (E4c) eine ungerade Anzahl von Korrelatoren umfasst, wobei die Anzahl der Vorlauf-Codereplikationssignale gegenüber dem Hauptcodereplikationssignal (SCRP(t)) und die Anzahl der Nachlauf-Codereplikationssignale ($SC_{R(k)}$(t)) gegenüber dem Hauptcodereplikationssignal (SCRP(t)) gleich sind.

4. Empfänger (10) für Funknavigationssignale nach einem der Ansprüche 1 bis 3, wobei das ankommende GNSS-Signal eine ausgesendete Trägerfrequenz und einen Coderhythmus aufweist, wobei der Skalierungskoeffizient (44) gleich dem Verhältnis zwischen dem Coderhythmus und der Trägerfrequenz ist.

5. Empfänger (10) für Funknavigationssignale nach einem der Ansprüche 1 bis 4, wobei die vom Codeintegrator (45) ausgegebene Codeposition der Codeposition der Hauptreplik entspricht.

6. Empfänger (10) für Funknavigationssignale nach einem der Ansprüche 1 bis 5, wobei die vom Codeintegrator (45) ausgegebene Codeposition der um eine konstante Abweichung verschobenen Codeposition der Hauptcodereplik entspricht.

7. Empfänger (10) für Funknavigationssignale nach Anspruch 6, wobei die vom Codeintegrator (45) ausgegebene Codeposition einer Codeposition einer am weitesten vorauslaufenden Codereplik entspricht.

8. Empfänger (10) für Funknavigationssignale nach einem der Ansprüche 1 bis 7, wobei das Trägerreplikationssignal (Srep(t)), das Basisbandsignal Sbb(t), die Hauptkorrelation (50) und die Vorlauf- und Nachlaufkorrelationen (51) komplex sind;

wobei der Korrelationsleistungsindikatorrechner (E4d) so konfiguriert ist, dass er Korrelationsleistungen auch aus komplexen Korrelationen aus Sekundärkorrelatoren (71) bestimmt;
wobei ein Konjugatkomplexrechner (70), der in der Lage ist, einen Konjugatkomplex aus der Hauptkomplexkorrelation (50) zu berechnen, am Ausgang der Hauptkomplexkorrelation (50) so angeordnet ist, dass er den Konjugatkomplex aus der Hauptkorrelation (50) liefert; und

wobei die Sekundärkorrelatoren (71) so angeordnet sind, dass jede der komplexen Hauptkorrelation (50) und der komplexen Vorlauf- und Nachlaufkorrelationen (51) über die Betriebsperiode ($T_{fb}$) mit dem konjugierten Komplex (70) der Hauptkorrelation (50) korreliert ist;

wobei der Ausgang der Sekundärkorrelatoren (71) den Eingang des komplexen Korrelationsleistungsindikatorrechners (E4d) bilden.

9. Empfänger (10) für Funknavigationssignale nach Anspruch 8, wobei die Betriebsperiode ($T_{fb}$) einer inkohärenten Integrationszeit ($T_{nc}$) entspricht.

10. Empfänger (10) für Funknavigationssignale nach Anspruch 9, wobei die inkohärente Integrationszeit ($T_{nc}$) gleich einem Vielfachen der kohärenten Integrationszeit (Tic) der Hauptkorrelation ist.

11. Empfänger (10) für Funknavigationssignale nach einem der Ansprüche 1 bis 8, wobei die Betriebsperiode ($T_{fb}$) einer kohärenten Integrationszeit entspricht.

**Claims**

1. A radio navigation signal receiver (10), comprising:

   - a radio frequency stage (E1) for producing a GNSS signal (Sr(t)), from an incident GNSS signal;
   - a generator (E2) of a carrier replica signal (Srep(t)), the carrier replica signal (Srep(t)) being an estimate of the carrier of the GNSS signal (Sr(t));
   - a mixer (47) of the carrier replica signal (Srep(t)) with the digitized GNSS signal (Sr(t)), configured to obtain a baseband signal Sbb(t);
   - a code position control loop (E4) comprising:

     - a code replica signal generator (E4a) comprising a code integrator (45) configured to deliver, at the input of a code generator (43), an estimated code position, the code generator (43) comprising, on the one hand, a generator (43a) of main code replica signal ($SC_{R(L)}(t)$) delivering at the output a main code replica signal ($SC_{R(L)}(t)$) and, on the other hand, a plurality of generators (43b) of early and late code replica signals ($SC_{R(k)}(t)$) each having a code delay or advance offset relative to the main code replica signal ($SC_{R(L)}(t)$);
     each replica of the plurality being indexed by an integer index between 1 and n;
     - a plurality of correlators (E4c) capable of calculating a correlation function:

       - between the main code replica signal ($SC_{R(L)}(t)$) and the baseband signal Sbb(t) in order to produce a main correlation (50) over a coherent integration time (Tic);
       - between each of the early and late code replica signals ($SC_{R(k)}(t)$) and the baseband signal (Sbb(t)) in order to produce early and late correlations (51) over the coherent integration time (Tic); each correlator of the plurality being indexed by an index;

     - a correlation power indicator calculator (E4d) configured to:

       - determine correlation powers from the main correlation (50) and from the early and late correlations (51); and
       - determine a maximum correlation power from the correlation powers so as to obtain a primary index (kmax) corresponding to the index of the correlator showing the maximum correlation power;

     - a correction calculator (E4e) configured to determine an adjusted code frequency, as a function of the primary index (kmax), as a function of an index (L) corresponding to the correlator processing the main code replica signal ($SC_{R(L)}(t)$), as a function of an operating period ($T_{fb}$) and as a function of an adjustable gain; the code chip frequency command being the sum of the adjusted code frequency derived from the correction calculator (E4e) and a carrier aid signal derived from a physical model (41) multiplied by a scaling coefficient (44), said physical model (41) corresponding to a Doppler aid or a fine velocity aid, the code position control loop (E4) comprising an output (60) delivering at least the main correlation (50).

2. The radio navigation signal receiver (10) according to claim 1 wherein the adjacent index correlators process code replica signals ($SC_{R(L)}(t)$), ($SC_{R(k)}(t)$) separated from each other by a constant value d of a chip of the GNSS signal code.

3. The radio navigation signal receiver (10) according to any one of claims 1 or 2 wherein the plurality of correlators (E4c) comprises an odd number of correlators, the number of early code replica signals relative to the main code replica signal (SCRP(t)) and the number of late code replica signals (SC$_{R(k)}$(t)) relative to the main code replica signal (SCRP(t)) being equal.

4. The radio navigation signal receiver (10) according to any of claims 1 to 3, the incident GNSS signal being provided with an emitted carrier frequency and a code rate, in which receiver the scaling coefficient (44) is equal to the ratio of the code rate to the carrier frequency.

5. The radio navigation signal receiver (10) according to any of claims 1 to 4, wherein the code position delivered by the code integrator (45) corresponds to the code position of the main replica.

6. The radio navigation signal receiver (10) according to any of claims 1 to 5, wherein the code position delivered by the code integrator (45) corresponds to the code position of the main code replica translated by a constant offset.

7. The radio navigation signal receiver (10) according to claim 6, wherein the code position delivered by the code integrator (45) corresponds to a code position of the earliest code replica.

8. The radio navigation signal receiver (10) according to any one of claims 1 to 7, wherein the carrier replica signal (Srep(t)), the baseband signal Sbb(t), the main correlation (50) and the early and late correlations (51) are complex; wherein the correlation power indicator calculator (E4d) is configured to determine correlation powers also from complex correlations derived from secondary correlators (71);

   wherein a complex conjugate calculator (70), capable of calculating a complex conjugate from the main complex correlation (50), is arranged at the output of the main complex correlation (50) so as to deliver the complex conjugate of the main correlation (50); and
   wherein the secondary correlators (71) are arranged so that each of the main complex correlation (50) and the early and late complex correlations (51) is correlated to the complex conjugate (70) of the main correlation (50) over the operating period (T$_{fb}$);
   the output of the secondary correlators (71) constituting the input of the complex correlation power indicator calculator (E4d).

9. The radio navigation signal receiver (10) according to claim 8, wherein the operating period (T$_{fb}$) corresponds to a non-coherent integration time (T$_{nc}$).

10. The radio navigation signal receiver (10) according to claim 9, wherein the non-coherent integration time (T$_{nc}$) is equal to a multiple of the coherent integration time (Tic) of the main correlation.

11. The radio navigation signal receiver (10) according to any of claims 1 to 8, wherein the operating period (T$_{fb}$) corresponds to a coherent integration time.

**Fig. 1**

**Fig. 2**

**EP 4 165 441 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2746232 B1